Europäisches Patentamt

(19) European Patent Office

Office européen des brevets

(11) Publication number: 0 081 716
A1

# (12) EUROPEAN PATENT APPLICATION

(21) Application number: 82110894.1

(51) Int. Cl.³: F 02 B 29/04

(22) Date of filing: 25.11.82

(30) Priority: 16.12.81 IT 360681

(71) Applicant: DIAVIA S.p.A., Via Nebili 2, I-40062 Molinella (Bologna) (IT)

(72) Inventor: Minghetti, Guide, Via Corsica, 11, I-40135 Bologna (IT)
Inventor: Pasquale, Luigi, Via Selva della Pescarela, 40/25, I-40131 Bologna (IT)
Inventor: Mantellini, Carlo G., Via Brizio, 48, I-40134 Bologna (IT)
Inventor: Tugnoli, Ive, Via Gregorio XIII, I-40100 Bologna (IT)

(43) Date of publication of application: 22.06.83 Bulletin 83/25

(74) Representative: Modiano, Guido et al, MODIANO, JOSIF, PISANTY & STAUB Modiano & Associati Via Meravigli, 16, I-20123 Milan (IT)

(84) Designated Contracting States: DE FR GB

(54) Intake air cooling system for supercharged endothermal engines.

(57) This invention relates to an intake air cooling system for supercharged endothermal enginges, in particular engines whose intake air is pumped in by means of a turbocharger. The inventive system is of the cooling cycle type, with the evaporator (17) accommodated in a plenum chamber (15) which is connected on one side to the turbocharger delivery duct (14) and on the other side to the air-fuel mixing device (16). The evaporator (17) is interposed between the turbocharger delivery duct (14) and the mixing device (16) such as to be swept by the pressurized intake air flow.

ACTORUM AG

COMPLETE DOCUMENT

This invention relates to an intake air cooling system for supercharged endothermal engines, in particular engines wherein the intake air is fed through a turbocharger.

As is known, in turbocharged endothermal engines, air undergoes by compression a temperature increase which, from ambient temperature levels, can reach about 180°C with racing machines. This temperature increase involves two substantial disadvantages: first, it causes an increase of the intake air specific volume, and hence, a decrease of the engine specific power output. Second, there arise problems with the cooling of the cylinder, piston top, and valves, since the air-fuel mixture sweeping such parts cannot apply on the same an effective cooling action. Moreover, there occur self-ignition phenomena and resulting knocking in the combustion chambers.

To obviate such drawbacks, it has been already proposed of conveying the intake air through a heat exchanger, wherein the cooling fluid is either air or water, which exchanger is located between the turbocharger and mixing device (either an injector or a carburetor). In the former case, the exchanger is located on the motorvehicle such as to be swept and crossed by the air; in the latter case, a circulation pump is provided which is driven by the engine. However, not even this approach has shown to be adequately satisfactory because the machine efficiency, in relation to the weight and volume of the exchanger, is definitely lower.

0081716

Accordingly the task of this invention is to provide a novel design system as indicated, whereby the above-mentioned problem is substantially and effectively obviated.

Within that task it is an object of the invention to provide a system as indicated, which is highly versatile in application, such that it can be associated with both gasoline and diesel endothermal engines, or combinations thereof.

According to one aspect of the present invention the above task and objects are achieved by an intake air cooling system for supercharged endothermal engines, in particular engines wherein the intake air is fed through a turbocharger, characterised in that it comprises at least one cooling cycle system the evaporator whereof is accommodated in a chamber connected, on one side, to the turbocharger delivery duct and, on the other side, to an air-fuel mixing device, said evaporator being interposed between said duct and said device to be swept by the pressurized intake air flow.

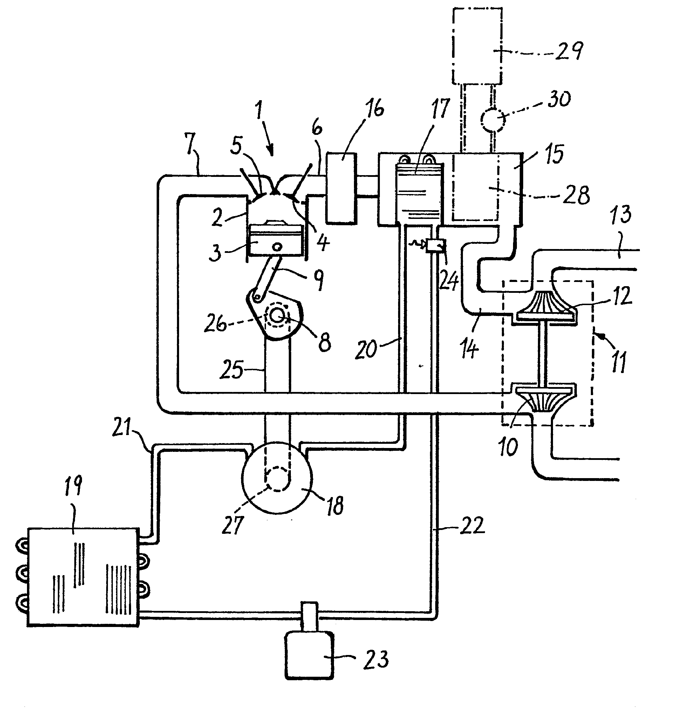

Further features and advantages of the invention will be more clearly understood from the following description of one embodiment thereof, illustrated by way of example in the accompanying drawing, the only figure whereof shows a schematical view of the inventive system.

Making reference to the cited drawing figure, generally indicated at 1 is a combustion engine, including a cylinder 2 wherein a piston 3 is slidably accommodated.

- 4 -

0081716

Indicated at 4 and 5, respectively, are the intake and exhaust valves, whence there extend an intake duct 6 and exhaust duct 7.

The piston 3, in a conventional manner, is connected to the crankshaft 8 by means of a connecting rod 9.

Arranged along the exhaust duct 7 is the turbine 10 of a centrifugal turbocharger of conventional construction, which is generally indicated at 11 and comprises a pump 12 rotatively associated with the turbine 10.

The pump 12 draws air axially through an intake duct 13 and conveys it through a delivery duct 14 which leads to an expansion chamber 15, commonly termed in the art "plenum chamber".

The plenum chamber is in practice a manifold performing the function of an accumulator chamber which enables the air to be distributed under pressure to the various cylinders.

From the plenum chamber 15, there extends the cited intake duct 6, which includes an air-fuel mixing device 16, usually of the injection type.

The plenum chamber 15 accommodates the evaporator 17 of a cooling system, which also comprises a compressor 18 and condenser 19. The evaporator 17 is interposed between the duct 14 and duct 6.

The inlet of the compressor 18 is connected to the outlet of the evaporator 17 by means of a duct 20, its outlet being connected to the inlet of the condenser 19 by means of a duct 21.

The outlet of the condenser 19 is connected to the inlet end of the evaporator 17 by a duct 22, which includes an accumulator 23 and expansion valve 24.

The compressor 18 derives its motion from the crankshaft 8 through a flexible drive member, e.g. a drive belt or chain 25 in closed loop configuration around pulleys or sprockets 26,27 which are keyed to the crankshaft 8 and compressor shaft.

With the engine 1 in operation, the exhaust gases from the cylinder 2 flowing through the duct 7 will drive the turbine rotatively at a high speed, and accordingly the pump 12 connected thereto.

The pump 12 draws air from the duct 3 and conveys it into the duct 14 while compressing it into the chamber 15. Owing to the compression effect, the air is heated, and in that heated condition is delivered into the chamber 15, whence it continues through the duct 6.

However, within the chamber 15, the air temperature undergoes a significant decrease because it is forced through the evaporator. In fact, in the evaporator 17, in accordance with the traditional cooling cycle by compression of saturated steam, there occurs an expansion of the cooling mixture which, in passing from the liquid phase to the gaseous one, owing to a known physical principle, takes in heat from the environment, in this specific instance from the air reaching the plenum chamber. The mixture is returned again to the liquid phase in the condenser 19, while the accumulator 23 keeps the liquid pressure

0081716

constant.

It will be appreciated from the foregoing that cooled air reaches the cylinder 2 with the valve 4 in its open position.

Tests carried out have shown that the cooling undergone by the air in the evaporator 17 restores the air temperature to acceptable levels close to the levels for which the optimum carburation of the engine is calibrated.

Thus, the invention fully achieves its objects. In particular, there is observed an increase of the specific power output in relation to the increased air mass for a given pressure, and an improved cooling of the cylinder, piston, valves, and spark plugs.

It may be utilised independently as described hereinabove, or in combination with exchangers of the type described in the preamble.

A specially advantageous embodiment of the invention contemplates the combination thereof with air-conditioning systems for passenger cars. As is known, such conditioning systems already include a cooling system by compression of saturated steam or vapor. When provided with adequate power, such a system could comprise two or more evaporators, one of which may be used for cooling the air compressed by the turbocharger and the other for air-conditioning purposes. It should be noted that such a system would be better utilised even during those periods of the year, such as in winter, when air-conditioning is not normally utilised.

An important advantage of the invention is to be seen in that the system power consumption is amply compensated for by the improved engine performance.

The compressor may be driven, instead of by the crankshaft as illustrated, by an electric motor powered by a rechargeable battery, or by another motive source through a suitable transmission.

The engine intake air may be cooled through one or more systems according to the invention. The latter choice would be advantageous with plural cylinder line engines, wherefor plural discrete or parallel connected systems may be provided.

A further embodiment of the invention, shown in dash-and-dot lines in the drawing, provides for its combination with a heat exchanger 28 accommodated in the plenum chamber 15 and connected to a radiator 29 located externally and adapted to be swept by an airflow created by a fan or the motorvehicle forward movement. The circulation of the cooling fluid (e.g. water) is accomplished by means of a pump 30 driven by the engine itself or by some other means. The exchanger is positioned within the plenum chamber such that the compressed air from the turbocharger is passed therethrough, and such that it will contribute to the air cooling prior to the latter reaching the evaporator.

Pre-cooling of the compressed air may also be accomplished by using the engine water cooling system.

## CLAIMS

1. An intake air cooling system for supercharged endothermal engines, in particular engines wherein the intake air is fed through a turbocharger, characterized in that it comprises at least one cooling cycle system the evaporator (17) whereof is accomodated in a chamber (15) connected, on one side, to the turbocharger delivery duct (14), and on the other side, to an air-fuel mixing device (16), said evaporator (17) being interposed between said duct (14) and said device (16) to be swept by the pressurized intake air flow.

2. A system according to Claim 1, characterised in that said chamber (15) is the expansion chamber or plenum chamber.

3. A system according to either Claim 1 or 2, for cooling the intake air of supercharged endothermal engines, in particular for motorvehicles equipped with an air-conditioning system, characterised in that the evaporator (17) is operatively associated with said air-conditioning system.

4. A system according to either Claim 1 or 2, characterised in that it comprises a cooling compressor (18) deriving its motion from the engine cranshaft (8) through transmission means (25).

5. A system according to either Claim 1 or 2, characterised in that it comprises a cooling compressor (18) driven by a battery powered electric motor.

6. A system according to Claim 1, characterised in that it comprises a heat exchanger (28) accommodated within the expansion or plenum chamber (15) and connected to a radiator (29) on the outside thereof and adapted to be swept by an airflow, there being provided a pump (30) for circulating the cooling fluid through said exchanger (28) and said radiator (29).

7. A system according to Claim 6, characterised in that said radiator (29) is the radiator of the engine water cooling system.

8. An intake air cooling system for supercharged endothermal engines, according to the preceding claims and as herein described and illustrated in the accompanying drawing.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-1 501 121 (SOCIETE D'EXPLORATION DES MATERIELS HISPANO-SUIZA S.A.) *Page 7, claims 1,2; page 8, claim 5; page 9, claim 8* | 1,4,5, 8 | F 02 B 29/04 |
| X | FR-A-1 316 961 (COOPER-BESSEMER CORP.) *Page 2, lines 47-111* | 1,6,7, 8 | |
| X | US-A-4 270 365 (SAMPIETRO) *Column 1, lines 4-6; column 2, line 58-62; figure 1* | 1 | |
| X | US-A-4 237 689 (SAMPIETRO) *Column 2, line 60 to column 3, line 63; figure 1* | 1 | TECHNICAL FIELDS SEARCHED (Int. Cl. 3) |
| Y | FR-A-1 597 204 (BABCOCK-ATLANTIQUE) *Page 2, line 41 to page 3, line 8* | 1,6,8 | F 02 B  F 01 P |
| Y | CH-A- 248 927 (SCHWEIZERISCHE LOKOMITIV & MASCHINENFABRIK) *Page 1, line 61 to page 2, line 19* | 1,4,5, 8 | |
| P,Y | GB-A-2 091 343 (NISSAN) *Page 3, claims 1,2* | 1,3,4, 8 | |

The present search report has been drawn up for all claims

| Place of search THE HAGUE | Date of completion of the search 15-03-1983 | Examiner TATUS W.D. |
|---|---|---|